# EUROPEAN PATENT APPLICATION

(11) **EP 3 489 783 A1**
(43) Date of publication of application: **29.05.2019**
(21) Application number: 18208972.2
(22) Date of filing: 28.11.2018
(51) Int. Cl.: G05D 1/00, G01C 23/00, G08G 5/00

(54) **SYSTEM FOR DISTRIBUTED FLIGHT MANAGEMENT CAPABILITY**

(30) Priority: 28.11.2017 IN 201741042706; 14.05.2018 US 201815978832
(71) Applicant: Honeywell International Inc., Morris Plains, NJ New Jersey 07950 (US)
(72) Inventor: MACDOWELL, Connor, Morris Plains, NJ 07950 (US); HAMMER, Todd, Morris Plains, NJ 07950 (US); MOHAN, Rajeev, Morris Plains, NJ 07950 (US); SARKAR, Partho, Morris Plains, NJ 07950 (US); UDUPA, Ravish, Morris Plains, NJ 07950 (US); SNYDER, Richard, Morris Plains, NJ 07950 (US)
(74) Representative: Houghton, Mark Phillip

(57) **Abstract**

Systems are provided for providing distributed flight management capability for flight management systems (FMS) of a fleet of aircraft. The system comprises an FMS located on board and electronically integrated into the avionics system of each of the aircraft in the fleet. The system also has a digital twin FMS that contains identical software components and capabilities of the FMS. The digital twin FMS is located off board the aircraft and is in communication with each of the FMSs via a digital communications link. The digital twin FMS is configured to provide pre-flight planning for each aircraft that is dispatched to each FMS via the digital communications link.

## Description

### TECHNICAL FIELD

The present invention generally relates to aircraft operations, and more particularly relates to a distributed flight management capability for aircraft.

### BACKGROUND

The use of embedded avionics software is critical to optimizing flight planning and minimizing fuel and time considerations for aircraft operations. A common component is a flight management system (FMS) that is integrated on board the aircraft. The FMS is a specialized computer that automates a variety of in-flight tasks such as in-flight management of the flight plan. Using various sensors, the FMS determines the aircraft's position and guides the aircraft along its flight plan using its stored navigation database. Additionally, the FMS may be loaded with various software applications that assist in flight planning that perform such tasks as flight planning, lateral and vertical trajectory calculations and optimization of flight trajectory. It would be advantageous to have a similar system located off board the aircraft to provide supplemental and redundant electronic flight planning capability. Hence, there is a need for a distributed flight management capability for an FMS of an aircraft.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A system is provided for providing distributed flight management capability for flight management systems (FMS) of a fleet of aircraft. The system comprises: a plurality of FMSs, with each FMS located on board a designated aircraft in the fleet, where each FMS is electronically integrated into an avionics system of its designated aircraft; a digital twin FMS that contains identical software components and capabilities of each of the plurality of FMSs, where the digital twin FMS is located off board each of the aircraft and is in communication with each of the FMS via a digital communications link; and where the digital twin FMS is configured to provide pre-flight planning for each aircraft that is dispatched to each FMS via the digital communications link.

A system is provided for providing distributed flight management capability for flight management systems (FMS) of a fleet of aircraft. The system comprises: a plurality of FMSs, with each FMS located on board a designated aircraft in the fleet, where each FMS is electronically integrated into an avionics system of its designated aircraft; a digital twin FMS that contains identical software components and capabilities of each of the plurality of FMSs, where the digital twin FMS is located off board each of the aircraft and is in communication with each of the FMS via a digital communications link; and where the digital twin FMS is configured to provide schedule management of the fleet of aircraft prior to flight operations.

A system is provided for providing distributed flight management capability for flight management systems (FMS) of a fleet of aircraft. The system comprises: a plurality of FMSs, with each FMS located on board a designated aircraft in the fleet, where each FMS is electronically integrated into an avionics system of its designated aircraft; a digital twin FMS that contains identical software components and capabilities of each of the plurality of FMSs, where the digital twin FMS is located off board each of the aircraft and is in communication with each of the FMS via a digital communications link; and where the digital twin FMS is configured to provide air traffic control of the fleet of aircraft during flight operations.

Furthermore, other desirable features and characteristics of the system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of an aircraft with a twin FMS located on an offboard component of the aircraft in accordance with one embodiment;
FIG.2 shows a diagram of an aircraft with a twin FMS as a cloud-based component in accordance with one embodiment; and
FIG.3 shows a diagram of an aircraft with a twin FMS located within an on-board the aircraft server in accordance with one embodiment;
FIG.4 shows a diagram of an aircraft with a ground based twin FMS in accordance with one embodiment; and
FIG.5 shows a diagram of an aircraft fleet each with a ground based twin FMS in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A system for providing distributed flight management capability for an aircraft has been developed. The system involves creating an exact digital "twin" of the aircraft's existing FMS operating outside of the onboard, certified aircraft avionics. The digital twin would include of the same software components that perform the tasks of flight planning, lateral and vertical trajectory calculation and optimization of the trajectory that reside onboard the aircraft. The "twin FMS" would have the same interaction with inputs and outputs as the onboard system including: navigation data; atmospheric data; and aircraft performance data. The twin FMS has the capability to interact in the same manner as with other on-board equipment to accomplish flight planning tasks including: defining origin/destination flight pairs; performing standard instrument departure (SID); standard terminal arrival route (STAR); approach procedures; and airway stringing. Features that have typically been part of an embedded "on-board" avionics are available in the twin platform.

For example, the Aeronautical Radio, Incorporated (ARINC) 702 based flight planning and subsequent data such as the projected (curved) flight path of the aircraft over the ground, the time and fuel burn needed to fly the plan, may be fully synchronized between both the on-board FMS and the digital twin FMS. The ARINC 702 Navigation System Data Base Standard is an international standard file format for aircraft navigation data maintained by Airlines Electronic Engineering Committee and published by Aeronautical Radio, Inc. The ARINC 702 specifications are not a database, but a standard for the preparation and transmission of data for assembly of airborne navigation system data bases. ARINC 702 specifies a 132-byte fixed-length record format. Each record consists of one piece of navigation information such as an airport, heliport, runway, waypoints, navigation aids, airways, arrival routes, and departure routes.

In some embodiments, the digital twin resides on non-certified platforms such as an electronic flight bag (EFB), in the cloud-based component, within an on-board aircraft server, or as a ground based component. In alternative embodiments, certification authorities may certify some level of platforms that are not physically connected to the aircraft. In these embodiments, a non-attached platform may in fact be certified. It should be clear to one of ordinary skill, that embodiments may apply to all non-attached platforms, both certified and non-certified.

Each of these digital twin FMS systems is in communication with the original FMS via a digital communications link. These configurations permit utilization of enhanced computing power to enable: better algorithms (e.g., laterally optimized flight plans or three-dimensional optimized flight planning); better understanding of the weather/Notice to Airmen (NOTAM)/air traffic control (ATC) environment; and better representation of individual aircraft and data mining capabilities for traffic flow analysis. This allows flight planning on the ground with access to high intensity calculations to aid the optimization of the flight planning via a mobile device and also connection with the on-board avionics for in-flight flight planning. This also allows optimized flight planning to minimize fuel and time based on more advanced atmospheric conditions, traffic conditions and environmental constraints such as NOTAMS and dynamic ATC restrictions. Each electronic twin device can provide results that are the same as the onboard avionics. For example, an EFB with a twin FMS can provide a defined path that matches the path that the on-board avionics calculated and uses for flight guidance.

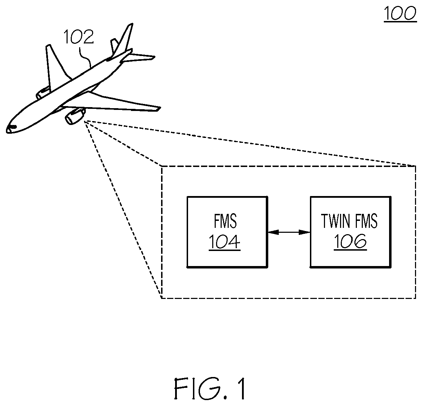

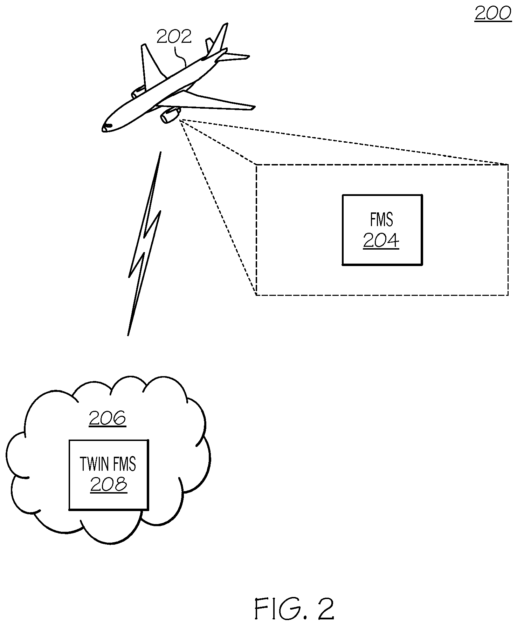

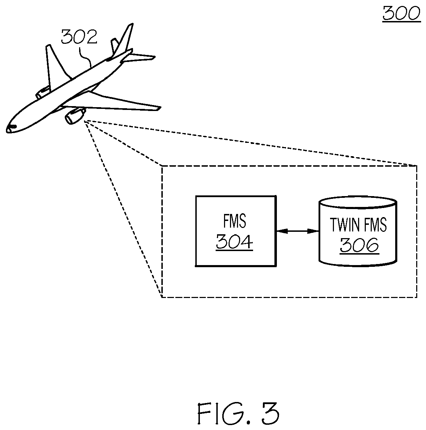

Turning now to FIG. 1, a diagram 100 is shown of an aircraft 102 with an FMS 104 and a digital twin FMS 106 that is a non-certified "offboard" component such as an EFB or electronic tablet. The FMS 104 is integrated into the aircraft's 102 certified or "onboard" avionics systems. In this example, the twin FMS 106 may be portable and removed from the aircraft by the aircrew. Turning now to FIG. 2, a diagram 200 is shown of an aircraft 202 within on board certified FMS 204 and a digital twin FMS 208 that is cloud-based 206. The digital twin FMS 208 is a noncertified offboard component that is in communication with the FMS 204 via a digital communications link. Turning now to FIG. 3, a diagram 300 is shown of an aircraft 302 with an FMS 304 and the digital twin FMS 306 that is stored in the aircraft's 302 on board server. In this example, both the FMS 304 and the digital twin FMS 306 may be considered on board certified components in some embodiments.

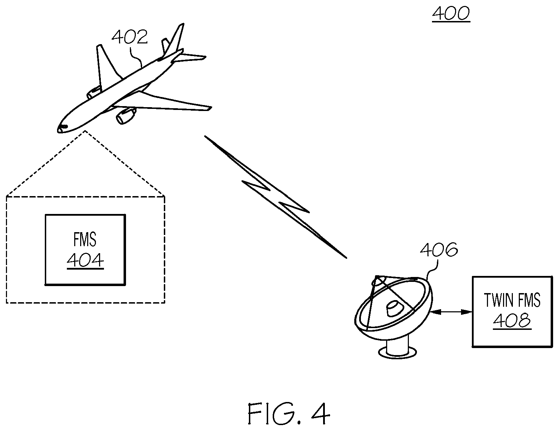

Turning now to FIG. 4, a diagram 400 is shown of an aircraft 402 with an onboard certified FMS 404 that is connected to a ground-based digital twin FMS 404 through a digital communications link 406. The ground-based twin FMS 408 may be used as a single twin FMS for a fleet of multiple aircraft. In some embodiments, the aircraft fleet may be unmanned aerial vehicles (UAVs). These UAVs may be remotely piloted vehicles (RPV's) with a remote pilot located on the ground or an autonomous drone that flies a preprogrammed route or based on series of instructions.

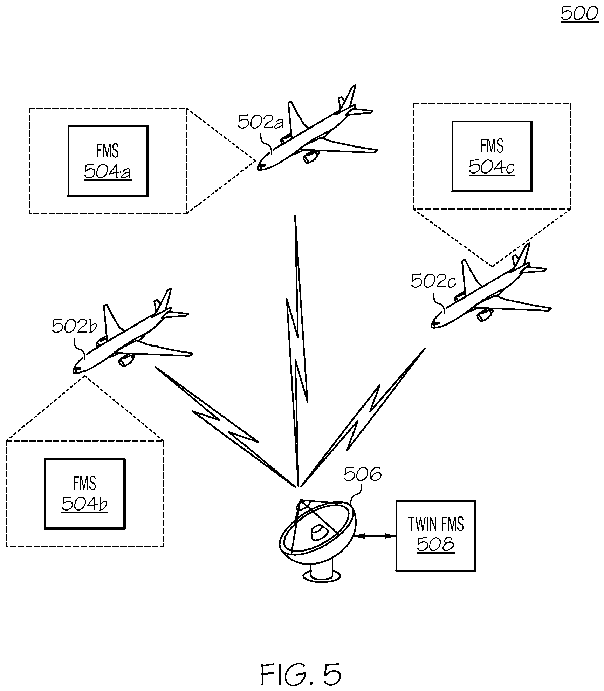

Turning now to FIG. 5, a diagram 500 is shown of a fleet of multiple aircraft 502a, 502b and 502c each with an onboard FMS 504a, 504b and 504c and a single ground-based digital twin FMS 508 that is connected to each aircraft via a data communications link 506. The single ground-based twin FMS 506 provides flight management of the aircraft fleet. The twin FMS 406 has the ability to plan, review and file flight plans that match exactly with the plans used on board each of the aircraft in their respective FMS. This guarantees plans used to dispatch the aircraft will be the plans that each crew uses when initiating their flight. The twin FMS 508 may also provide management prior to and during the flight of each aircraft. This capability increases the reliability and scheduling of the aircraft fleet. In other embodiments, the ground-based twin FMS 508 may provide air traffic control capabilities for the fleet of aircraft during flight operations including monitoring for conflicts and between aircraft.

In some embodiments, the ground based twin FMS may include a Strategic Planning Engine (SPE). The SPE is a lean and highly configurable aeronautical flight planning and mission predictions engine built out of core software assets (e.g., a Flight Management Engine or FME). The SPE uses the same algorithms as the avionics systems to take in ARINC 702 based flight planning data and determine the flight plan, calculate the lateral plan, calculate the time and fuel information, optimize the plan for the best lateral and vertical flight paths, and provide capabilities to enable "what if' situations such as depressurization and engine out emergencies, etc. The SPE may include machine learning capabilities to "learn" an aircraft's fuel and flight characteristics to aid in calculating accurate lateral paths and trajectory time and fuel burn predictions. The SPE may also integrate into secure communication environments and include data sources for weather, and navigation data.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for providing distributed flight management capability for Flight Management Systems (FMS) of a fleet of aircraft, comprising:
a plurality of FMSs, with each FMS located on board a designated aircraft in the fleet, where each FMS is electronically integrated into an avionics system of its designated aircraft;
a digital twin FMS that contains identical software components and capabilities of each of the plurality of FMSs, where the digital twin FMS is located off board each of the aircraft and is in communication with each of the FMS via a digital communications link; and
where the digital twin FMS is configured to provide pre-flight planning for each aircraft that is dispatched to each FMS via the digital communications link.

2. The system of Claim 1, where the FMS and digital twin FMS of each aircraft in the fleet are in communication using an ARINC 702 format.

3. The system of Claim 1, where the preflight planning includes a projected flight path for each of the aircraft in the fleet.

4. The system of Claim 1, where the preflight planning includes an estimated time of flight of each aircraft in the fleet.

5. The system of Claim 1, where the preflight planning includes estimated fuel usage of each aircraft in the fleet.

6. The system of Claim 1, where the digital twin FMS is ground-based.

7. The system of Claim 1, where the digital twin FMS is located on-board the designated aircraft.

8. The system of Claim 1, where the digital twin FMS is cloud-based.
